# EUROPÄISCHE PATENTANMELDUNG

(11) **EP 2 160 943 A2**
(43) Veröffentlichungstag der Anmeldung: **10.03.2010**
(21) Anmeldenummer: 09169481.0
(22) Anmeldetag: 04.09.2009
(51) Int. Cl.: A01K 27/00, G08B 5/00

(54) **Orientierungselement für Tiere und Menschen**

(30) Priorität: 08.09.2008 DE 202008011948 U
(71) Anmelder: Equi-Vision Trading GmbH & Co. KG, 53567 Buchholz (DE)
(72) Erfinder: Röming, Günter, 53567, Asbach (DE)
(74) Vertreter: Ganahl, Bernhard

(57) **Zusammenfassung**

Ein Orientierungselement bzw. Orientierungsband für Tiere, insbesondere Hunde, weist einen wiederaufladbaren elektrischen Energiespeicher (5); eine Mehrzahl von Leuchtkörpern (4); eine Leiteranordnung (2) zum elektrischen Verbinden der Leuchtkörper mit dem Energiespeicher; eine biegsame, wenigstens teilweise lichtdurchlässige, im Wesentlichen schlauchförmige Umhüllung (1) zur Aufnahme wenigstens des Leuchtkörpers und der Leiteranordnung; ein erstes Verbindungsglied (3a), welches an einem ersten Ende der Umhüllung anbringbar oder angebracht ist; und ein zweites Verbindungsglied (3b), welches an einem zweiten Ende der Umhüllung anbringbar oder angebracht ist. Das erste Verbindungsglied und das zweite Verbindungsglied sind mit der Leiteranordnung elektrisch verbindbar oder verbunden und sind miteinander mechanisch und elektrisch kuppelbar oder gekuppelt. Ferner ist die Leiteranordnung innerhalb der Umhüllung längenveränderlich, insbesondere verkürzbar und ist die Umhüllung entsprechend einer Länge der Leiteranordnung ablängbar oder abgelängt.

## Beschreibung

Die vorliegende Erfindung betrifft ein Orientierungselement, insbesondere ein leuchtendes Halsband, für Tiere, insbesondere Hunde.

Es ist wünschenswert, eine Leuchtquelle an Tieren, insbesondere Heim- und Nutztieren wie etwa Hunden, anzubringen, um das Tier beispielsweise bei nächtlichen Spaziergängen für andere Verkehrsteilnehmer wahrnehmbar zu machen oder ein frei laufendes Tier bei Dunkelheit auffinden zu können. Für Hunde, die ein schlechteres optisches Auflösungsvermögen als Menschen besitzen, können durch eine besondere Leuchtquelle eine zusätzliche Orientierungshilfe bei Dunkelheit erfahren. Bei nachtjagenden Tieren wie etwa Katzen kann, sofern dieses Verhalten unerwünscht ist, eine mitgeführte Leuchtquelle eine optische Warnung für potentielle Beutetiere darstellen.

Elektrisch betriebene, leuchtende Hundehalsbänder sind bekannt. Sie bestehen bisher aus einem geschlossenen Ring und werden den Hunden über den Kopf gestülpt. Sie besitzen einen Schalter zum Ein- und Ausschalten der Leuchtfunktion. Es sind Einweg-Halsbänder, die mit nicht-austauschbaren Batterien versehen sind. Nach der Entladung der Batterien ist das Halsband nicht mehr benutzbar. Diese Halsbänder werden in zahlreichen verschiedenen Größen und Farben hergestellt und beim Händler bevorratet. Um den meisten Kundenwünschen gerecht zu werden, müssen die Händler dreißig bis vierzig unterschiedliche Bänder auf Vorrat halten. Da das Halsband so groß sein muss, dass es über den Kopf gestülpt werden kann, ist es möglich, dass es auch unbeabsichtigt wieder über den Kopf rutscht und verloren geht. Insbesondere ist es in der Länge nicht anpassbar. Die verwendete Elektronik kann nicht mittels moderner Massenfertigungsverfahren produziert werden.

Andererseits gibt es auch Tierhalsbänder mit Leuchtkörpern, die mit einem lösbaren mechanischen Verschluss versehen sind, sodass sie nicht über den Kopf gestülpt werden müssen, sondern um den Hals gelegt werden können. Diese Leuchtkörper sind an das Tierhalsband gebunden und müssen daher für jeden Typ von Halsband individuell hergestellt und angepasst werden. Derartige Halsbänder sind beispielsweise aus der DE 20 2007 013 752 U1 und der DE 20 2006 001 561 U1 bekannt.

Der vorliegenden Erfindung liegt die Aufgabe bzw. liegen die Teilaufgaben zugrunde, ein Leuchtband für Tiere zu schaffen,
- das als eigenständiger Ring vorliegt,
- das nachträglich, etwa nach Kundenanforderung, in der Länge angepasst werden kann,
- das eine einfache Handhabung, insbesondere beim Anlegen und bei Einschalten, aufweist,
- das langlebig und auch bei widriger Witterung, insbesondere Nässe oder Feuchtigkeit, funktionsfähig ist und bleibt,
- das mit einer wiederaufladbaren Energiequelle versehen ist, und
- das kostengünstig hergestellt, insbesondere durch automatisierte Verfahren, und bevorratet werden kann.

Ein Teil der vorstehend genannten Teilaufgaben wird mit den im Schutzanspruch 1 aufgeführten Merkmalen gelöst. Weitere Teilaufgaben werden durch die Unteransprüche gelöst.

Demnach weist ein Orientierungselement für Tiere, insbesondere Hunde, einen elektrischen Energiespeicher; eine Mehrzahl von Leuchtkörpern; eine Leiteranordnung zum elektrischen Verbinden der Leuchtkörper mit dem Energiespeicher; eine biegsame, wenigstens teilweise lichtdurchlässige, im Wesentlichen schlauchförmige Umhüllung zur Aufnahme wenigstens des Leuchtkörpers und der Leiteranordnung; ein erstes Verbindungsglied, welches an einem ersten Ende der Umhüllung anbringbar oder angebracht ist; und ein zweites Verbindungsglied, welches an einem zweiten Ende der Umhüllung anbringbar oder angebracht ist. Das erste Verbindungsglied und das zweite Verbindungsglied sind mit der Leiteranordnung elektrisch verbindbar oder verbunden und sind miteinander mechanisch und elektrisch kuppelbar oder gekuppelt. Ferner ist die Leiteranordnung innerhalb der Umhüllung längenveränderlich, insbesondere verkürzbar und ist die Umhüllung entsprechend einer Länge der Leiteranordnung ablängbar oder abgelängt.

Ein solches Band ist über die Verbindungsglieder einem Tier einfach anzulegen und zu verschließen. Mit dem gleichen Handgriff kann die Energiezufuhr an die Leuchtkörper geschlossen werden. Durch Verkürzen der Leiteranordnung im Inneren der Umhüllung und Ablängen der Umhüllung sowie Anschließen und Anbringen der Verbindungsglieder kann das Band auf einfache Weise an den Halsumfang eines Tieres bzw. einen Kundenwunsch angepasst werden. Da eine Größe für einen beträchtlichen Bereich von Halsumfängen verwendet und angepasst werden kann, muss nur eine begrenzte Anzahl von Größen bevorratet werden.

Das Band kann einen flexiblen Verbindungsleiter zum Verbinden des ersten Verbindungsglieds mit einer Anschluss-Stelle auf der Leiteranordnung aufweisen, wobei der flexible Verbindungsleiter ein Flexleiter oder ein isolierter flexibler Draht oder eine isolierte flexible Litze ist. Hierdurch kann (nach der Längenanpassung) eine Verbindung zwischen der Leiteranordnung und dem ersten Verbindungsglied über den Verbindungsleiter hergestellt werden, der Verbindungsleiter ohne Leiterbruch in die Umhüllung geschoben und die Umhüllung mit dem ersten Verbindungsleiter verschlossen werden. Dadurch wird die Montage erheblich vereinfacht.

Vorzugsweise ist die Leiteranordnung ein lang gestreckter Flexleiter, auf welchem die Leuchtkörper angeordnet sind und der wenigstens eine Anschluss-Stelle zum Anschließen des ersten Verbindungsglieds aufweist und der um 180° umbiegbar oder umgebogen ist; wobei der flexible Verbindungsleiter eine Länge aufweist, die wenigstens einem Weg in Längsrichtung der Umhüllung bis zu wenigstens einer der Anschluss-Stellen auf dem Flexleiter entspricht, wenn der Flexleiter durch Umbiegen verkürzt ist. Flexleiter sind auf einfache Weise automatisiert herstellbar und bestückbar. Mit der hohen Biegsamkeit um bis zu 180° kann eine Längenverkürzung des Bandes einfach durch Umbiegen des Flexleiters und Stecken des umgebogenen Endes in die Umhüllung erzielt werden. Die Länge des flexiblen Verbindungsleiters ist vorteilhaft an die mögliche Verkürzung angepasst.

Wenn der flexible Verbindungsleiter fest mit dem ersten Verbindungsglied verbunden ist, ist die Handhabung besonders einfach. Die Handhabbarkeit wird noch einmal erleichtert, wenn das Band wenigstens eine Anschlussbuchse zur Aufnahme eines Endes des flexiblen Verbindungsleiters aufweist, die auf der Leiteranordnung angeordnet ist.

Vorzugsweise ist eine Mehrzahl von Anschlussbuchsen auf der Leiteranordnung angeordnet, wobei die Anschlussbuchsen vorbestimmte, vorzugsweise gleiche Abstände in Längsrichtung des Leuchtkörpers zueinander aufweisen. So kann bei umgebogenem und in die Umhüllung gestecktem Flexleiter die Verbindungsleitung in eine vorteilhaft erreichbare Anschlussbuchse gesteckt werden, was die Handhabbarkeit und Anpassbarkeit weiter verbessert.

Wenn die Leiteranordnung vor jeder Anschlussbuchse außer der ersten eine vordefinierte, insbesondere gekennzeichnete Soll-Trennstelle aufweist, an welcher die Leiteranordnung unter Aufrechterhaltung der Funktion ablängbar ist, können nicht verwendete Teile der Leiteranordnung entfernt werden.

Die Verbindungsglieder sind vorzugsweise wasser- und feuchtigkeitsdicht auf dem jeweiligen Ende der Umhüllung kraftschlüssig anbringbar oder angebracht, um die Betriebssicherheit des Bandes auch bei schlechten Umgebungsbedingungen zu gewährleisten.

Eine besonders haltbare und dichte Befestigung der Verbindungsglieder auf den Enden der Umhüllung kann erzielt werden, wenn die Verbindungsglieder an einem zur Anbringung an der Umhüllung vorgesehenen Ende eine Umfangsrillung oder Umfangswellung oder ein Gewinde aufweisen, mit dessen Hilfe sie an der Umhüllung kraftschlüssig anbringbar oder angebracht sind. Auf diese Weise wird eine wasserresitente Verbindung bereitgestellt.

Die Verbindungsglieder sind vorzugsweise so ausgebildet, dass das erste Verbindungsglied einen elektrischen Stecker oder eine elektrische Buchse aufweist und das zweite Verbindungsglied eine elektrische Buchse oder einen elektrischen Stecker aufweist, die mit dem elektrischen Stecker bzw. der elektrischen Buchse des ersten Verbindungsglieds elektrisch verbindbar oder elektrisch verbunden ist, und dass das erste Verbindungsglied mit dem zweiten Verbindungsglied über eine mechanische Kupplungseinrichtung mechanisch miteinander kuppelbar oder gekuppelt sind, wobei die Kupplungseinrichtung eine manuell betätigbare, insbesondere manuell lösbare Sicherungseinrichtung zum Sichern gegen ein Lösen der mechanischen Kupplung und der elektrischen Verbindung aufweist. Die Kupplungseinrichtung kann z.B. ein Bajonettverschluss oder ein Drehring sein. Es sind alle Kombinationen von Buchse-Stecker und Stecker-Buchse je nach Anforderungsprofil denkbar. Wenn die Kupplungseinrichtung zusätzlich ein Kupplungsglied aufweist, welches sowohl mit dem ersten Verbindungsglied als auch mit dem zweiten Verbindungsglied kuppelbar oder gekuppelt und elektrisch verbindbar oder elektrisch verbunden ist, können auch beide Verbindungsglieder eine elektrische Buchse oder einen elektrischen Stecker aufweisen, wenn das Kupplungsglied die entsprechenden Gegenstücke aufweist. Die Handhabbarkeit und Betriebssicherheit können noch verbessert werden, wenn die Kupplungseinrichtung im gekuppelten Zustand eine Verdrehung der Verbindungsglieder gegeneinander bzw. gegen das Kupplungsglied ermöglicht.

Vorzugsweise weist das Band eine Steuerschaltung zum Steuern der Energiezufuhr von dem elektrischen Energiespeicher zu den Leuchtkörpern auf. Die Steuerschaltung kann einen Schalter, vorzugsweise einen Drucktaster, mit wenigstens einer Ein-Schaltstellung und einer Aus-Schaltstellung aufweisen. So kann zusätzlich zu der Schließung des Stromkreises durch den Verschluss die Stromzufuhr an die Leuchtkörper unterbrochen werden, ohne dazu das Band abnehmen zu müssen. Dies ist etwa von Vorteil, wenn aus der Dunkelheit ein beleuchtetes Gebäude für begrenzte Zeit betreten wird. Die Steuerschaltung kann ferner eine Schutzeinrichtung zum Begrenzen einer Spannung oder eines Stroms an den Leuchtmitteln, eine Signal- und/oder Treiberelektronik zur Ansteuerung der Leuchtmittel und/oder einen Funk- oder Infrarotempfänger aufweisen.

Die Steuerschaltung kann in einem der Verbindungsglieder, vorzugsweise in dem zweiten Verbindungsglied, oder innerhalb der Umhüllung, vorzugsweise auf der Leiteranordnung angeordnet sein. Es ist vorteilhaft, wenn die Steuerschaltung in der Nähe des Verbindungsglieds angeordnet ist, welches nicht an dem Ende der Längenänderung gelegen ist.

Wenigstens die Buchsen oder die Leuchtkörper können in SMD-Bauweise hergestellt und auf der Leiteranordnung angebracht sein, gleiches gilt für die Steuerschaltung. Die SMD-Bauweise ist standardisiert und gut automatisierbar. Die Leuchtkörper sind vorzugsweise LEDs, die einen geringen Stromverbrauch und ein lange Haltbarkeit aufweisen.

Besonders bevorzugt wird eine Ein- und Ausschaltung des leuchtenden Bandes durch Verbinden und Lösen der Verbindungsglieder oder durch Sichern und Lösen der Sicherungseinrichtung bewerkstelligt.

Die Anordnung der Verbindungsglieder ist zur Sicherstellung der Betriebssicherheit wasser- und feuchtigkeitsresistent ausgelegt.

Der elektrische Energiespeicher kann in einem der Verbindungsglieder, vorzugsweise in dem zweiten Verbindungsglied, oder in dem Kupplungsglied, oder innerhalb der Umhüllung angeordnet sein und im letzteren Fall mit einem der Verbindungsglieder, vorzugsweise dem zweiten Verbindungsglied, und der Leitungsanordnung verbunden sein.

Der elektrische Energiespeicher kann wiederaufladbar, insbesondere aus wenigstens einer Mikro-Akkumulatorzelle aufgebaut sein. Hierdurch wird das Band von einem Wegwerfartikel zu einem lange verwendbaren Gegenstand, der auch eine wertige Gestaltung und den Einsatz zuverlässiger elektronischer Bauteile sinnvoll macht. Ist der Energiespeicher in einem Kupplungsglied angeordnet, kann der Energiespeicher aufgeladen werden und das Leuchtband derweil mit einem anderen Kupplungsglied mit aufgeladenem Energiespeicher betrieben werden.

Die Erfindung ist auch auf ein Ladegerät zum Laden eines wiederaufladbaren elektrischen Energiespeichers gerichtet, wobei das Ladegerät an einer externen Wechselstromquelle oder Gleichstromquelle anschließbar ist und eine Verbindungseinrichtung zum Verbinden mit der elektrischen Energiequelle des leuchtenden Bandes gemäß Anspruch 27 sowie eine Ladeschaltung zum vorzugsweise geregelten Umwandeln der Spannung der externen Wechselstromquelle bzw. Gleichstromquelle in eine für die elektrische Energiequelle geeignete Gleichspannung und Erzeugen Zuführen eines zum Laden der elektrischen Energiequelle geeigneten Ladestroms aufweist. Die Verbindungseinrichtung kann eine wasser- und feuchtigkeitsresistente Kupplungseinrichtung aufweisen.

In einer weiteren Ausführungsform der vorliegenden Erfindung ist die Kupplungseinrichtung ein Bajonettverschluss oder ein Drehring.

Weiterhin ist die Kupplungseinrichtung im gekuppelten Zustand derart ausgebildet, dass eine Verdrehung der Verbindungsglieder gegeneinander beziehungsweise gegen das Kupplungsglied möglich ist.

In einer weiteren Ausführungsform der vorliegenden Erfindung sind wenigstens die Buchsen oder die Leuchtkörper oder die Steuerschaltung in SMD-Bauweise hergestellt und auf der Leiteranordnung angebracht. Alternativ ist die Steuerschaltung in SMD-Bauweise hergestellt und auf der Leiteranordnung angebracht.

In einer weiteren Ausführungsform der vorliegenden Erfindung ist die Anordnung der Verbindungsglieder wasser- und feuchtigkeitsresistent.

In einer weiteren Ausführungsform der vorliegenden Erfindung ist der elektrische Energiespeicher in einem der Verbindungsglieder, vorzugsweise in dem zweiten Verbindungsglied angeordnet. Der elektrische Energiespeicher kann auch in dem Kupplungsglied angeordnet sein. Alternativ kann der elektrische Energiespeicher auch innerhalb der Umhüllung angeordnet sein und mit einem der Verbindungsglieder, vorzugsweise dem zweiten Verbindungsglied, und der Leitungsanordnung verbunden sein.

Erfindungsgemäß ist der elektrische Energiespeicher wiederaufladbar, insbesondere ist er aus wenigstens einer Mikro-Akkumulatorzelle aufgebaut.

In einer weiteren Ausführungsform der vorliegenden Erfindung weist die Verbindungseinrichtung eine wasser- und feuchtigkeitsresistente kraftschlüssige verbundene Kupplungseinrichtung auf.

Weitere Aufgaben, Merkmale und Vorteile der vorliegenden Erfindung werden aus der Beschreibung der beispielhaften Ausführungsformen ersichtlich, die in den beigefügten Zeichnungen dargestellt sind.

Fig. 1 zeigt ein Orientierungselement für Tiere nach einer bevorzugten Ausführungsform der Erfindung.

Fig. 2 zeigt ein Ladegerät für ein Orientierungselement für Tiere nach der Erfindung.

Fig. 3 zeigt einen Abschnitt eines leuchtenden Bandes für Tiere nach der Erfindung im auseinandergenommenen Zustand und in drei verschiedenen Ablängzuständen.

Fig. 4 zeigt ein Orientierungselement für Tiere nach der Erfindung mit Ablänghilfen.

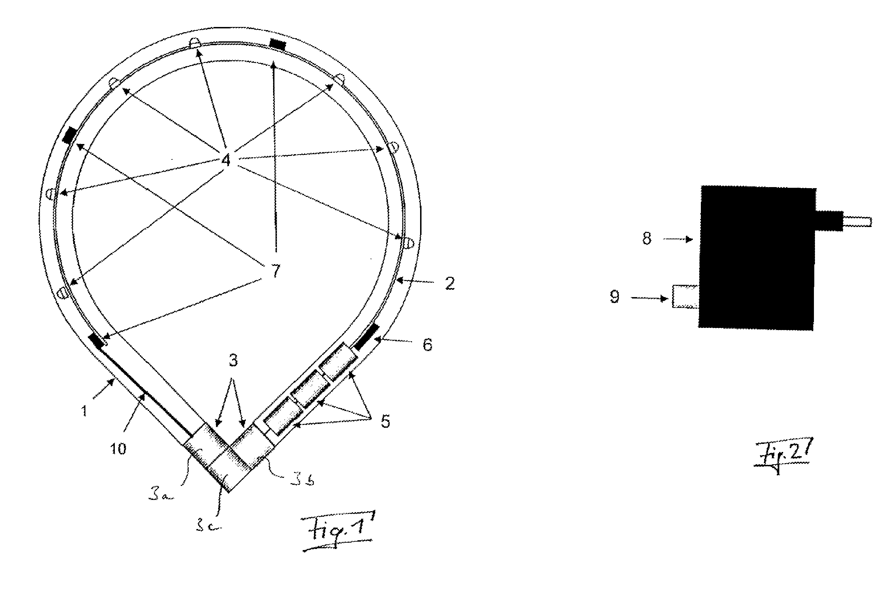

Der Aufbau und das Funktionsprinzip der vorliegenden Erfindung werden anhand einer schematischen Darstellung in Fig. 1 bis 4 erläutert.

Ein leuchtendes Tierhalsband nachstehend auch als Leuchtband bezeichnet ist aus einem als Umhüllung dienenden Schutzschlauch 1 mit mehreren LEDs 4 und einer Signal- und Treiberelektronik 6 auf einem Flexleiter 2 aufgebaut und enthält eine Energieversorgung 5 und einen Bajonettverschluss 3. Als Flexleiter wird eine extrem dünne und biegsame elektrische Leiterplatte bezeichnet, auch Folienleiter genannt. Solche Flexleiter werden z.B. bei elektrischen Leitungsverbindungen über Gelenke wie etwa bei klappbaren Bildschirmen von tragbaren Computern oder Kameras verwendet. Der Verschluss dient gleichzeitig der mechanischen Verriegelung, dem Schließen des elektrischen Stromkreises wie auch als Adapter zum Anschließen eines Ladegeräts. In der dargestellten Form weist der Bajonettverschluss zwei Verbindungsglieder 3a, 3b und ein Kupplungsglied 3c auf, das von beiden Verbindungsgliedern 3a, 3b trennbar ist.

Zur Anpassung der Länge ist der Flexleiter 2 mit drei SMD-Buchsen/Stiften 7 bestückt, an die die Energieversorgung 5 über den Bajonettverschluss 3 und einen flexiblen Verbindungsleiter 10 angekuppelt werden kann. Bei Kürzungslängen zwischen zwei Buchsen/Stiften 7 wird der Schlauch abgeschnitten und die Energieversorgung an die nächste Buchse bzw. den nächsten Stift angekuppelt. Der überstehende Teil des Flexleiters 2 wird in den Schlauch geschoben. Bei Kürzungslängen größer als der Buchsenabstand wird zusätzlich der Flexleiter 2 an den Flexleiterschnittpositionen 11a, 11b gekürzt.

Die mechanisch-elektrische Steckverbindung 3 ist als metallischer wasserresistenter Bajonettverschluss mit einem Innenleiter aufgebaut. Der Bajonettverschluss dient zum wiederlösbaren, mechanischen Verriegeln beim Anlegen des Orientierungselementes an einen Körper. Der Innenleiter realisiert die elektrische Verbindung zum Anschalten der elektrischen und elektronischen Bauelemente 4, 6, 7 an die Energieversorgung 5, sobald der Bajonettverschluss verriegelt wird. Alle Verbindungen zwischen Verschluss und Schutzelement sind als unlösbare Verbindung ausgeführt und wasserresistent.

Die elektrischen und elektronischen Bauteile 4, 6, 7 sind in SMD-Technologie ausgeführt. Die elektronischen Bauelemente werden mit SMD-Bestückungsautomaten auf einer modernen flexiblen Leiterplatte (Flexleiter) 2 mit Polyimid als Trägermaterial bestückt und mit gängigen SMD-Lötverfahren gelötet. Der Flexleiter 2 ist konstruktiv so ausgeführt, dass diese ohne die Funktion zu schädigen in der Länge gekürzt werden kann. Insbesondere sind die Leitungen auf dem Flexleiter 2 so angeordnet, dass eine Kürzung an den vordefinierten Flexleiterschnittpositionen 11a, 11b die Funktion des verbleibenden Teils nicht beeinträchtigt.

Die Energieversorgung 5 ist in Form von Miniaturakkumulatoren ausgeführt. Zum Wiederaufladen wird eine Hälfte des Verschlusses auf ein Ladegerät 8 (Fig. 2) mit passendem Adapter oder Gegenstück 9 zur Verschlusshälfte gesteckt.

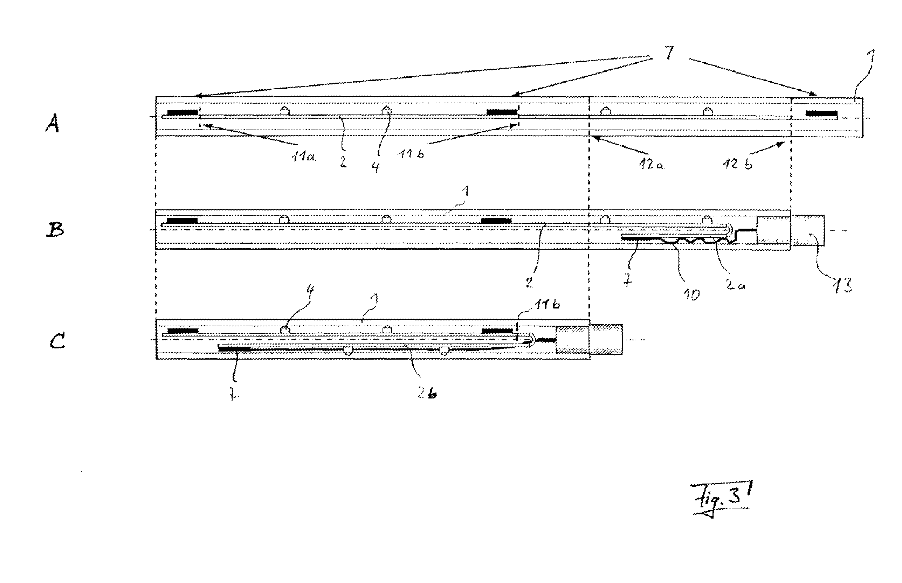

Fig. 3 zeigt einen Abschnitt des Leuchtbandes der Erfindung im Bereich des ablängbaren Endes in drei verschiedenen Situationen "A", "B" und "C". Im oberen Bereich der Figur (Darstellung "A") ist das Ende des Flexleiters 2 gestreckt, und das Ende des Schutzschlauchs 1 ist offen. Am Ende des Flexleiters 2 ist eine SMD-Buchse/Stift 7 angeordnet, dann folgen zwei LEDs 4, gefolgt von einer weiteren SMD-Buchse/Stift 7 und zwei LEDs 4 sowie einer letzten SMD-Buchse/Stift 7. Hieran schließen sich, obschon dies außerhalb des dargestellten Abschnitts liegt, weitere LEDs 4 an. Der Schutzschlauch 1 weist zwei markierte Schlauchschnittpositionen 12a und 12b auf. Der Flexleiter 2 weist zwei markierte Flexleiterschnittpositionen 11a und 11b auf, die jeweils vor der zweiten und dritten SMD-Buchse/Stift 7 gelegen sind, von dem Ende des Schutzschlauchs 1 aus gesehen.

Im mittleren Bereich der Figur 3 (Darstellung "B") ist der Schutzschlauch 1 an der Schlauchschnittposition 12b abgelängt und ein Ende 2a des Flexleiters 2 um 180° umgebogen und in den Schutzschlauch 1 geschoben. Ein BNC-Stecker 13 mit daran befestigtem Verbindungsleiter 10 ist auf das freie Ende des Schutzschlauchs 1 gesteckt, wobei der Verbindungsleiter 10 an der ersten SMD-Buchse/Stift 7 angeschlossen ist.

Im unteren Bereich der Figur 3 (Darstellung "C") ist der Schutzschlauch 1 an der zweiten Schlauchschnittposition 12a abgelängt und ein längeres Ende 2b des Flexleiters 2 um 180° umgebogen und in den Schutzschlauch 1 geschoben. Der Stecker 3 mit daran befestigtem Verbindungsleiter 10 ist auf das freie Ende des Schutzschlauchs 1 gesteckt, wobei der Verbindungsleiter 10 wiederum an der ersten SMD-Buchse/Stift 7 angeschlossen ist, wobei der Verbindungsleiter 10 hier auf seine maximale Länge gestreckt ist.

Alternativ zu der Darstellung in Situation "C" in Fig. 3 könnte das umgebogene Ende 2b an der Flexleiterschnittposition 11b gekürzt und der Verbindungsleiter 10 an der zweiten SMD-Buchse/Stift 7 angeschlossen sein.

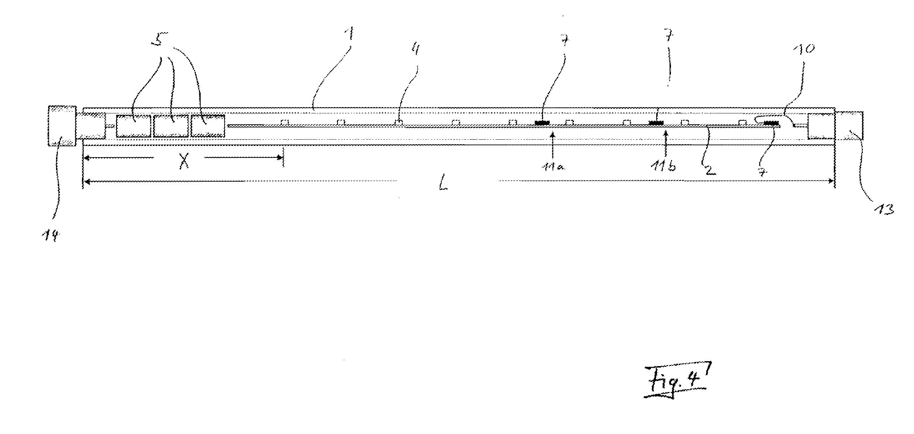

In Fig. 4 ist das gesamte Leuchtband in gestreckter Form dargestellt, wobei hier ein BNC-Stecker 13 und eine BNC-Buchse 14 als Verbindungsglieder ohne Kupplungsglied verwendet werden. Der Stecker 13 und die Buchse 14 sind so ausgelegt, dass sie axial ineinandergesteckt werden können.

In der Figur sind die Flexleiterschnittpositionen 11a, 11b dargestellt. Ferner ist die Gesamtlänge des Schutzschlauchs mit "L" und der Abstand vom Buchsenende des Schutzschlauchs mit "X" angegeben.

Gemäß einem Dimensionierungsbeispiel, welches die Erfindung in keiner Weise beschränkt, beträgt die Gesamtlänge L = 650 mm, befinden sich sieben LEDs 4 in Abständen von X = 90, 130, 170, 225, 280, 335, 390, 450 und 510 mm vom Buchsenende und befinden sich drei SMD-Buchsen/Stifte 7 in Abständen von X = 315, 425 und 545 mm vom Buchsenende bzw. Stiftende des Schutzschlauchs 1. Mit dieser Dimensionierung werden der Schutzschlauch 1 und der Flexleiter 2 in Bereichen zwischen X = 250 bis 300 mm und X = 335 bis 410 mm abgelängt. In Bereichen zwischen X = 445 bis 530 mm und X = 565 bis 650 mm wird nur der Schutzschlauch 1 abgelängt.

Es ist darauf hinzuweisen, dass die oben beschriebenen, derzeit bevorzugten Ausführungsformen der vorliegenden Erfindung nur beispielhaften Charakter aufweisen und nicht der Beschränkung der Erfindung auf die dort wiedergegebenen Einzelheiten und Zusammenstellungen dienen können. Vielmehr sind auf der Grundlage des dargelegten Erfindungsgedankens zahlreiche Abwandlungen und Kombinationen möglich, von denen einigen nachstehend kurz angerissen werden.

Der dargestellte Bajonettverschluss kann alternativ ohne Einsatz des Kupplungsgliedes 3c auskommen, wenn die Verbindungsglieder 3a, 3b allein zum Schließen des Stromkreises und zum mechanischen Verbinden der beiden Enden des Bandes geeignet sind.

Der Flexleiter 2 bildet eine Leiteranordnung im Sinne der Erfindung. Es sind jedoch auch andere Leiteranordnungen denkbar, deren Länge innerhalb des Schutzschlauchs 1 veränderlich ist. So kann die Leiteranordnung z.B. ein Geflecht von flexiblen, isolierten Drähten aufweisen, die durch Stauchen oder durch Verdrillen im Ganzen verkürzt werden können. Die Kürzung des Schutzschlauchs 1 erfolgt dann auf die beschriebene Weise.

In den vorstehenden Ausführungsformen wurde die mechanische und elektrische Verbindung durch eine Kombination aus Stecker und Buchse, wahlweise mit einem dazwischen geschalteten Kuppelglied hergestellt, wobei ein Bajonettverschluss zur mechanischen Sicherung eingesetzt wurde. Stecker und Buchse können von jeder bekannten Art sein, und die mechanische Sicherung kann auf andere Weise, etwa als Verschraubung oder Dreh-/Klemmverschluss ausgeführt sein. Es wurden z.B. BNC-Verbinder 13, 14 beschrieben. Statt einer dargestellten geraden Form können auch Winkelstecker oder Winkelbuchsen verwendet werden.

Die Leuchtkörper sind vorzugsweise LEDs (Leuchtdioden), können aber auch herkömmliche Glühlampen sein. LEDs sind für eine lange Haltbarkeit, einen geringen Stromverbrauch und eine geringe Wärmeentwicklung bekannt. Andererseits ist die Leuchtdichte noch begrenzt, und sie sind vergleichsweise teuer.

### Bezugszeichenliste

- 1: Schutzschlauch
- 2: Flexleiter
- 2a,2b: Leiterenden
- 3: Steckverbindung
- 3a,3b: Verbindungsglieder
- 3c: Kupplungsglied
- 4: Leuchtkörper (LED)
- 5: Zelle
- 6: Steuerelektronik
- 7: SMD-Buchse/Stift
- 8: Steckerladegerät
- 9: Adapter
- 10: Draht
- 11 a,11 b: Schnittpositionen für Schutzschlauch
- 12a,12b: Schnittpositionen für Leiterplatte
- 13: Buchse
- 14: Stecker
- L: Länge des Schutzschlauchs
- X: Abstand vom Buchsenende

## Patentansprüche

1. Orientierungselement für Tiere, insbesondere Hunde, aufweisend:
einen elektrischen Energiespeicher, der insbesondere wiederaufladbar ist;
eine Mehrzahl von Leuchtkörpern;
eine Leiteranordnung zum elektrischen Verbinden der Leuchtkörper mit dem Energiespeicher;
eine biegsame, wenigstens teilweise lichtdurchlässige, im Wesentlichen schlauchförmige Umhüllung zur Aufnahme wenigstens des Leuchtkörpers und der Leiteranordnung;
ein erstes Verbindungsglied, welches an einem ersten Ende der Umhüllung anbringbar oder angebracht ist; und
ein zweites Verbindungsglied, welches an einem zweiten Ende der Umhüllung anbringbar oder angebracht ist; wobei
das erste Verbindungsglied und das zweite Verbindungsglied mit der Leiteranordnung elektrisch verbindbar oder verbunden sind und miteinander elektrisch und mechanisch kuppelbar oder gekuppelt sind; und
die Leiteranordnung innerhalb der Umhüllung längenveränderlich, insbesondere verkürzbar ist und die Umhüllung entsprechend einer Länge der Leiteranordnung ablängbar oder abgelängt ist.

2. Orientierungselement gemäß Anspruch 1,
**weiter gekennzeichnet,**
**durch** einen flexiblen Verbindungsleiter zum Verbinden des ersten Verbindungsglieds mit einer Anschluss-Stelle auf der Leiteranordnung, wobei der flexible Verbindungsleiter ein Flexleiter oder ein isolierter flexibler Draht oder eine isolierte flexible Litze ist.

3. Orientierungselement gemäß Anspruch 2,
**dadurch gekennzeichnet,**
**dass** die Leiteranordnung ein lang gestreckter Flexleiter ist, auf welchem die Leuchtkörper angeordnet sind und der wenigstens eine Anschluss-Stelle zum Anschließen des ersten Verbindungsglieds aufweist und der um 180° umbiegbar oder umgebogen ist; und
**dass** der flexible Verbindungsleiter eine Länge aufweist, die wenigstens einem Weg in Längsrichtung der Umhüllung bis zu wenigstens einer der Anschluss-Stellen auf dem Flexleiter entspricht, wenn der Flexleiter durch Umbiegen verkürzt ist.

4. Orientierungselement gemäß Anspruch 2 oder 3,
**dadurch gekennzeichnet,**
**dass** der flexible Verbindungsleiter fest mit dem ersten Verbindungsglied verbunden ist.

5. Orientierungselement gemäß einem der Ansprüche 2 bis 4,
**weiter gekennzeichnet,**
**durch** wenigstens eine Anschlussbuchse, die auf der Leiteranordnung angeordnet ist, zur Aufnahme eines Endes des flexiblen Verbindungsleiters.

6. Orientierungselement gemäß Anspruch 5,
**dadurch gekennzeichnet,**
**dass** eine Mehrzahl von Anschlussbuchsen/Stifte auf der Leiteranordnung angeordnet ist, wobei die Anschlussbuchsen vorbestimmte, vorzugsweise gleiche Abstände in Längsrichtung des Leuchtkörpers zueinander aufweisen.

7. Orientierungselement gemäß Anspruch 6,
**dadurch gekennzeichnet,**
**dass** die Leiteranordnung vor jeder Anschlussbuchse außer der ersten eine vordefinierte, insbesondere gekennzeichnete Soll-Trennstelle aufweist, an welcher der Flexleiter unter Aufrechterhaltung der Funktion ablängbar ist.

8. Orientierungselement gemäß einem der vorstehenden Ansprüche,
**dadurch gekennzeichnet,**
**dass** die Verbindungsglieder wasser- und feuchtigkeitsdicht auf dem jeweiligen Ende der Umhüllung anbringbar oder angebracht sind.

9. Orientierungselement gemäß einem der vorstehenden Ansprüche,
**dadurch gekennzeichnet,**
**dass** die Verbindungsglieder an einem zur Anbringung an der Umhüllung vorgesehenen Ende eine Umfangsrillung oder Umfangswellung oder ein Gewinde aufweisen, mit dessen Hilfe sie an der Umhüllung kraftschlüssig anbringbar oder angebracht sind.

10. Orientierungselement gemäß einem der vorstehenden Ansprüche,
**dadurch gekennzeichnet,**
**dass** das erste Verbindungsglied einen elektrischen Stecker oder eine elektrische Buchse aufweist und das zweite Verbindungsglied eine elektrische Buchse oder einen elektrischen Stecker aufweist, die mit dem elektrischen Stecker bzw. der elektrischen Buchse des ersten Verbindungsglieds elektrisch verbindbar oder elektrisch verbunden ist, und
**dass** das erste Verbindungsglied mit dem zweiten Verbindungsglied über eine mechanische Kupplungseinrichtung mechanisch miteinander kuppelbar oder gekuppelt sind, wobei
die Kupplungseinrichtung eine manuell betätigbare, insbesondere manuell lösbare Sicherungseinrichtung zum Sichern gegen ein Lösen der mechanischen Kupplung und der elektrischen Verbindung aufweist.

11. Orientierungselement gemäß Anspruch 10,
**dadurch gekennzeichnet**
**dass** die Kupplungseinrichtung ein Kupplungsglied aufweist, welches sowohl mit dem ersten Verbindungsglied als auch mit dem zweiten Verbindungsglied kuppelbar oder gekuppelt und elektrisch verbindbar oder elektrisch verbunden ist.

12. Orientierungselement gemäß einem der vorstehenden Ansprüche,
**weiter gekennzeichnet**
**durch** eine Steuerschaltung zum Steuern der Energiezufuhr von dem elektrischen Energiespeicher zu den Leuchtkörpern, wobei
die Steuerschaltung einen Schalter, vorzugsweise einen Drucktaster, mit wenigstens einer Ein-Schaltstellung und einer Aus-Schaltstellung
und/oder eine Schutzeinrichtung zum Begrenzen einer Spannung oder eines Stroms an den Leuchtmitteln und/oder eine Signal- und/oder Treiberelektronik zur Ansteuerung der Leuchtmittel und/oder einen Funk- oder Infrarotempfänger aufweist,
wobei die Steuerschaltung in einem der Verbindungsglieder, vorzugsweise in dem zweiten Verbindungsglied oder innerhalb der Umhüllung, vorzugsweise auf der Leiteranordnung angeordnet ist.

13. Orientierungselement gemäß einem der vorstehenden Ansprüche,
**dadurch gekennzeichnet,**
**dass** eine Ein- und Ausschaltung des leuchtenden Bandes durch Verbinden und Lösen der Verbindungsglieder und/oder durch Einrasten und Lösen der Sicherungseinrichtung bewerkstelligt wird.

14. Orientierungselement gemäß einem der vorstehenden Ansprüche,
**dadurch gekennzeichnet,**
**dass** die Leuchtkörper LEDs sind.

15. Ladegerät zum Laden eines wiederaufladbaren elektrischen Energiespeichers,
wobei das Ladegerät an einer externen Wechselstromquelle oder Gleichstromquelle anschließbar ist,
**weiter gekennzeichnet**
**durch** eine Verbindungseinrichtung zum Verbinden mit der elektrischen Energiequelle des leuchtenden Bandes gemäß Anspruch 29 aufweist; und
**durch** eine Ladeschaltung zum vorzugsweise geregelten Umwandeln der Spannung der externen Wechselstromquelle bzw. Gleichstromquelle in eine für die elektrische Energiequelle geeignete Gleichspannung und Erzeugen Zuführen eines zum Laden der elektrischen Energiequelle geeigneten Ladestroms.
